# EUROPÄISCHE PATENTSCHRIFT

(11) **EP 1 874 586 B1**
(45) Veröffentlichungstag und Bekanntmachung des Hinweises auf die Patenterteilung: **14.08.2013**
(21) Anmeldenummer: 06723495.5
(22) Anmeldetag: 17.03.2006
(51) Int. Cl.: B60R 9/04

(54) **DACHGEPÄCKTRÄGER FÜR EIN FAHRZEUG SOWIE VERFAHREN ZUM BEFESTIGEN DES DACHGEPÄCKTRÄGERS**
ROOF RACK FOR A VEHICLE AND METHOD FOR FASTENING SAID ROOF RACK
BARRE DE TOIT DESTINEE A UN VEHICULE ET PROCEDE DE FIXATION DE BARRE DE TOIT

(30) Priorität: 19.04.2005 DE 102005017884
(43) Veröffentlichungstag der Anmeldung: 09.01.2008
(73) Patentinhaber: Hans und Ottmar Binder GmbH Oberflächenveredelung, 89558 Böhmenkirch (DE)
(72) Erfinder: BINDER, Hans, 89558 Böhmenkirch (DE); BINDER, Ottmar, 89558 Böhmenkirch (DE)
(74) Vertreter: Grosse, Rainer
(86) Internationale Anmeldenummer: PCT/EP2006/002451
(87) Internationale Veröffentlichungsnummer: WO 2006/111228

(56) Entgegenhaltungen:
- EP-A- 0 806 321
- EP-A- 1 348 597
- DE-U1- 20 317 894
- DE-U1-202004 018 079

## Beschreibung

Die Erfindung betrifft einen Dachgepäckträger für ein Kraftfahrzeug, der mindestens eine Dachleiste aufweist, die eine Befestigungsvorrichtung zur lösbaren Montage am Dach des Kraftfahrzeugs besitzt.

Dachgepäckträger der eingangs genannten Art sind optisch im Wesentlichen durch mindestens eine Dachleiste, vorzugsweise zwei, mit Abstand parallel zueinander verlaufenden Dachleisten, gekennzeichnet, wobei die Befestigung der jeweiligen Dachleiste, die mit ihrer Unterseite auf dem Dach des Fahrzeugs gegebenenfalls unter Zwischenschaltung einer Dichtung oder dergleichen aufliegt, möglichst nicht störend in Erscheinung treten soll. Hierfür ist es bekannt, in an der Unterseite der Dachleiste ausgebildete Gewindebohrungen Gewindestifte einzuschrauben. Zur Montage wird die Dachleiste mit den hervorstehenden Gewindestiften derart dem Dach des Kraftfahrzeugs zugeführt, dass die Gewindestifte in Aufnahmelöcher des Fahrzeugsdachs eingreifen. Anschließend erfolgt eine Festlegung der Dachleiste mittels Haltemuttern, die -vom Innern des Kraftfahrzeugs aus- auf die Gewindestifte geschraubt werden. Die bekannte Befestigungsvorrichtung ist sicher, erfordert jedoch eine aufwendige Montage. DE-U-20 2004 018 079 zeigt einen weiteren bekannten Dachgepäckträger.

Der Erfindung liegt daher die Aufgabe zugrunde, einen Dachgepäckträger für ein Kraftfahrzeug der eingangs genannten Art zu schaffen, der einfach und schnell sicher montiert und festgelegt werden kann.

Diese Aufgabe wird erfindungsgemäß dadurch gelöst, dass die Befestigungsvorrichtung eine Schiebebefestigungsvorrichtung ist. Demgemäß erfolgt das Befestigen dadurch, dass der Dachgepäckträger dem Dach des Kraftfahrzeugs zugeführt und dann zur Festlegung lediglich verschoben wird, das heißt, eine Verschiebebewegung der Dachleiste relativ zum Dach des Kraftfahrzeugs reicht aus, um die Dachleiste festzulegen. Die Festlegung kann somit von außen her erfolgen und erfordert lediglich die erwähnte Schiebebewegung, d. h. die aufwendigen Schraubarbeiten, die überdies vom Innern des Kraftfahrzeugs her erfolgen müssen, entfallen.

Die Erfindung sieht vor, dass die Befestigungsvorrichtung eine Schiebe-Hintergriffs-Befestigungsvorrichtung ist. Hierdurch ist eine Vorrichtung zu verstehen, bei der aufgrund der Schiebebewegung ein Hintergriff erzeugt wird, der die Festlegung der Dachleiste am Dach des Kraftfahrzeugs bewirkt.

Die Befestigungsvorrichtung ist eine Schiebe-Hintergriffs-Klemm-Befestigungsvorrichtung. Durch die Schiebebewegung wird der Hintergriff erzielt und ferner eine Klemmung bewirkt, die bevorzugt das feste Andrücken der Dachleiste an das Dach bewirkt, sodass die Dachleiste spielfrei gehalten ist. Ferner kann die Klemmung ein selbsttätiges Verschieben, insbesondere ein der erwähnten Schiebebewegung entgegenwirkendes Zurückschieben, verhindern beziehungsweise zumindest erschweren.

Die Befestigungsvorrichtung weist mindestens einen Einsteckvorsprung und mindestens eine Aufnahme für den Einsteckvorsprung auf. Zur Festlegung der Dachleiste wird der Einsteckvorsprung in die Aufnahme eingeführt. Anschließend erfolgt die Schiebebewegung, die quer, insbesondere rechtwinklig, zur Richtung der Einsteckbewegung verläuft. Der Einsteckvorsprung ist dem Dach und die Aufnahme der Dachleiste zugeordnet. Weiter ist vorgesehen, dass der Einsteckvorsprung auf dem Dach des Kraftfahrzeugs vormontiert wird, sodass er aus der Dachhaut herausragt. Anschließend wird die Dachleiste montiert, indem sie mit ihrer Aufnahme auf den Einsteckvorsprung gesteckt und anschließend -quer dazu- verschoben wird.

Der Einsteckvorsprung der Dachleiste und die Aufnahme ist dem Dach zugeordnet. In einem solchen Falle befindet sich der Einsteckvorsprung an der Dachleiste. Die so ausgestattete Dachleiste wird dem Dach des Kraftfahrzeugs zugeordnet, indem der Einsteckvorsprung in eine Aufnahme am Dach des Kraftfahrzeugs eingesteckt und anschließend -quer dazu- die Dachleiste relativ zum Dach verschoben wird, um sie festzulegen.

Ferner ist es vorteilhaft, wenn der Einsteckvorsprung eine eine Axialsicherung bildende Hintergriffsstufe aufweist. Beim Schiebevorgang bewirkt die Hintergriffsstufe einen Hintergriff zwischen Einsteckvorsprung und Aufnahme, sodass sich diese beiden Teile in einer entgegen der Einsteckrichtung gerichteten Richtung nicht mehr voneinander trennen lassen, da ein Formschluss bewirkt ist. Insbesondere kann vorgesehen sein, dass der Einsteckvorsprung zur Ausbildung der Hintergriffsstufe eine Taille aufweist. Der Einsteckvorsprung besitzt insbesondere einen Kopf, der sich bevorzugt an die Taille anschließt. Die Aufnahme besitzt insbesondere ein Langloch. Dies bedeutet, dass der Einsteckvorsprung für die Montage der Dachleiste zunächst in die Aufnahme eingesteckt wird und dann die quer dazu verlaufende Verschiebung erfolgt, wobei der Kopf einen Hintergriff an den Randbereichen des Langlochs bewirkt und hierdurch ein Formschluss bewirkt ist. Um den Einsteckvorsprung in das Langloch einstecken zu können, weist letzteres einen Bereich mit einer Querschnittserweiterung zum Einstecken des Kopfes des Einsteckvorsprungs auf.

Eine Weiterbildung der Erfindung sieht vor, dass die Aufnahme an einem Halteteil ausgebildet ist, das an der Dachleiste befestigt ist. Die Aufnahme kann unmittelbar an der Dachleiste ausgebildet sein oder wie vorstehend erwähnt- an einem separaten, jedoch an der Dachleiste befestigten, vorzugsweise lösbar befestigten Teil, nämlich dem Halteteil. Das Halteteil kann bevorzugt ein Blechteil, insbesondere ein Federblechteil sein.

Bevorzugt ist vorgesehen, dass das Halteteil für das vorzugsweise mittels der Hintergriffsstufe erfolgenden Klemmhalten eine Auflauf schräge bildet oder aufweist. Demzufolge läuft die Hintergriffsstufe beim bei der Montage erfolgenden Verschieben der Dachleiste auf die Auflaufschräge auf. Hierdurch wird vorzugsweise eine Niederzugskraft bewirkt, die die Dachleiste fest auf das Dach des Kraftfahrzeugs spannt. Insbesondere dann, wenn eine Eigenfederung am Einsteckvorsprung und/oder an der Aufnahme, insbesondere Halteteil, realisiert ist, wird das erwähnte Spannen der Bauteile unter Ausnutzung eines Federwegs realisiert. Insbesondere ist mindestens ein beteiligtes Bauteil eigenelastisch ausgebildet, um die Klemmung zu bewirken. Sofern als Halteteil ein Federblechteil gewählt ist, bietet das Federblech die erwähnte Spannbeaufschlagung. Zusätzlich kann durch das Klemmhalten ein ungewolltes Verschieben, insbesondere ein ungewolltes Zurückschieben der Dachleiste relativ zum Dach, verhindert oder erschwert werden.

Nach einer Weiterbildung der Erfindung kann vorgesehen sein, dass der Einsteckvorsprung ein Stehbolzen ist. Dieser wird am Dach des Kraftfahrzeugs montiert. Anschließend wird die Dachleiste zugeführt und durch Verschieben befestigt. Im Zuge dieser Anmeldung wird nur von einem Einsteckvorsprung und einer Aufnahme der Befestigungseinrichtung gesprochen. Vorzugsweise sind jedoch mehrere derartige Elemente über die Länge der Dachleiste verteilt angeordnet, um eine sichere Befestigung zu gewährleisten.

Um eine endpositionierte Dachleiste gegen ein Rückschieben und damit Lösen zu sichern, ist bevorzugt eine Schiebestellungssicherungseinrichtung vorgesehen, die nach Beendigung der Montage das Verschieben der Dachleiste relativ zum Dach verändert und daher eine Selbstdemontage des Dachgepäckträgers nicht auftreten kann.

Die Erfindung betrifft ferner ein Verfahren zum Befestigen eines Dachgepäckträgers für ein Kraftfahrzeug, der mindestens eine Dachleiste aufweist, die eine Befestigungsvorrichtung zur lösbaren Montage am Dach des Kraftfahrzeugs besitzt, wobei die Dachleiste mittels einer Einsteck- und Schiebebewegung befestigt wird.

Die Zeichnungen veranschaulichen die Erfindung anhand eines Ausführungsbeispiels, und zwar zeigt:
- Figur 1: eine perspektivische Ansicht des Endbereichs einer Dachleiste eines Dachgepäckträgers mit Befestigungsvorrichtung,
- Figur 2: eine Längsschnittansicht der Darstellung der Figur 1,
- Figur 3: eine Längsschnittsansicht im mittleren Bereich der Dachleiste und
- Figur 4: eine Querschnittsansicht des aus der Figur 3 hervorgehenden Gegenstands.

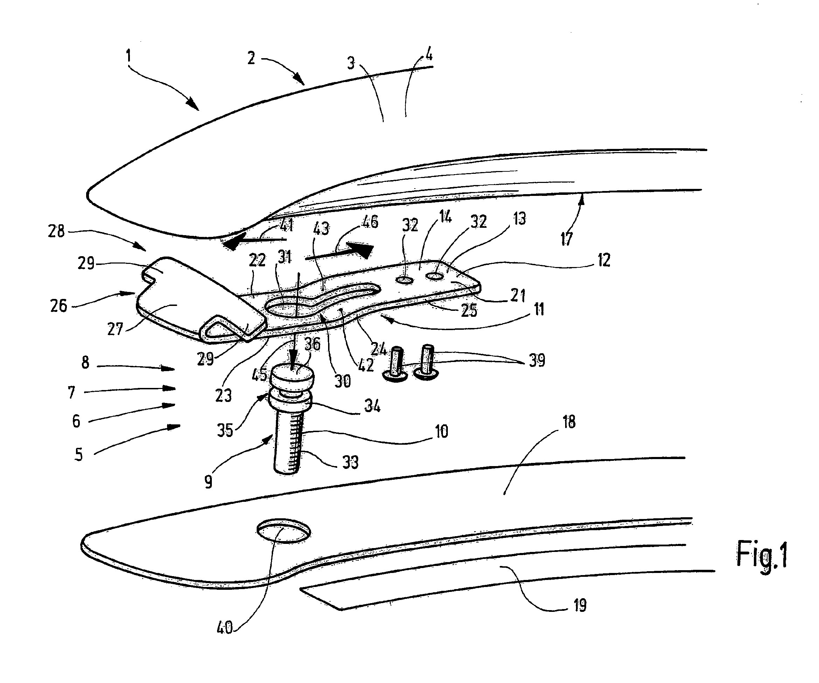

Die Figur 1 zeigt einen Endbereich 1 eines Dachgepäckträgers 2, der mindestens eine Dachleiste 3 aufweist, die eine Dachreling 4 bildet. Vorzugsweise werden zwei Dachleisten 3 beabstandet zueinander am Dach des Fahrzeugs befestigt. An die Dachleisten 3 lassen sich dann Zusatzeinrichtungen montieren, beispielsweise Fahrradhalter, Skiboxen usw., wobei gegebenenfalls Querträger zum Einsatz gelangen, die an den Dachleisten 3 befestigt werden.

Um eine Dachleiste 3 am Dach des Kraftfahrzeugs zu halten, ist eine Befestigungsvorrichtung 5 vorgesehen, die als Schiebebefestigungsvorrichtung 6, insbesondere Schiebe-Hintergriffs-Befestigungsvorrichtung 7, bevorzugt Schiebe-Hintergriffs-Klemm-Befestigungsvorrichtung 8 ausgebildet ist.

Die Befestigungsvorrichtung 5 weist einen Einsteckvorsprung 9 auf, der als Stehbolzen 10 ausgebildet ist. Ferner weist die Befestigungsvorrichtung 5 eine Aufnahme 11 auf, die an einem Halteteil ausgebildet ist. Das Halteteil 12 ist als Blechteil 13, insbesondere Federblechteil 14, ausgebildet. Es besteht vorzugsweise aus Stahl, insbesondere nicht rostendem Federstahl.

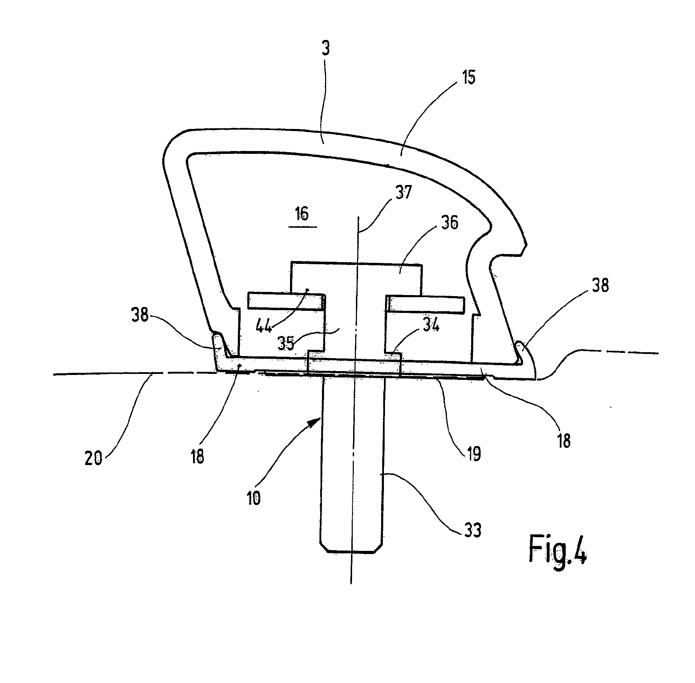

Die Dachleiste 3 ist einstückig ausgebildet und an ihren gegenüberliegenden Endbereichen bogenförmig abgeflacht, so wie dies aus der Figur 1 ersichtlich ist. Gemäß Figur 4 besteht die Dachleiste aus einem Hohlprofil 15, das einen Innenraum 16 aufweist. Die Dachleiste 3 weist keine Stützfüße oder dergleichen auf, sondern wird mit ihrer Unterseite 17 (Figur 1) unter Zwischenschaltung einer Dichtung 18 sowie eines doppelseitig klebenden Klebestreifens 19 dem Dach eines Fahrzeugs zugeordnet, wie dies deutlich aus der Figur 4 hervorgeht. Die gestrichelte Linie in Figur 4 stellt die Dachhaut 20 des Dachs des Kraftfahrzeugs dar.

Das Halteteil 12, das eine Stahlklammer 21 bildet, besitzt einen aus Federwerkstoff bestehenden Blechstreifen 22, der ein geradlinig verlaufendes Mittelstück 23, ein gekröpftes Zwischenstück 24 und ein geradlinig verlaufendes Endstück 25 besitzt. Der Endbereich 26 des Blechstreifens 22 ist unter Ausbildung eines Bogens 27 nach oben hochgeknickt und endseitig mit einer Verbreiterung 28 in Form von beidseitig ausgebildeten Laschen 29 versehen. Im Bereich des Mittelstücks 23 und des Zwischenstücks 24 ist die Aufnahme 11 in Form eines Langlochs 30 ausgebildet, das einen Bereich mit einer Querschnittserweiterung 31 besitzt. Die Querschnittserweiterung 31 ist im Wesentlichen kreisförmig gestaltet und geht in den Langlochabschnitt des Langlochs 30 über. Die Querschnittserweiterung 31 befindet sich im geradlinigen Mittelstück 23; der Langlochabschnitt des Langlochs 30 verläuft entlang des gekröpften Zwischenstücks 24 bis in einen Bereich des Endstücks 25, das wiederum eben, also geradlinig gestaltet ist. Das Endstück 25 weist zwei Durchgangslöcher 32 auf.

Der Stehbolzen 10 besitzt einen mit Außengewinde versehenen Schaftabschnitt 33, an den sich ein gegenüber dem Schaftabschnitt 33 im Durchmesser größerer Ringflansch 34 anschließt. Es folgt eine Taille 35 und ein sich daran anschließender Kopf 36. Aus der Figur 4 ist erkennbar, dass der Schaftabschnitt 33 im Durchmesser etwa dem Durchmesser der Taille 35 entspricht, dass der Durchmesser des Ringflansches 34 größer als der Durchmesser des Schaftabschnitts 33 sowie der Taille 35 ist und dass der Kopf 36 einen Durchmesser aufweist, der größer ist, als der Durchmesser des Ringflansches 34. Der Stehbolzen 10 besitzt eine Längsmittellinie 37.

Die Dichtung 18 ist der Peripherie der Auflagefläche (Unterseite 17) der Dachleiste 3 angepasst und kann -wie aus der Figur 4 ersichtlich- nach oben stehende Randstege 38 besitzen, die die Dachleiste 3 bereichsweise umfassen.

Zur Befestigung des Halteteils 12 im Innern 16 der Dachleiste 3 werden die beiden Laschen 29 in aus der Figur 1 nicht ersichtliche Aufnahmetaschen der Dachleiste 3 eingeschoben, sodass ein Hintergriff erzielt ist. Anschließend wird die Befestigung mittels zweier Blindniete 39 vorgenommen, die die Durchgangslöcher 32 durchgreifen und an der Dachleiste 3 festgelegt werden.

Für die Montage der Dachleiste 3 am Dach eines Kraftfahrzeugs wird wie folgt vorgegangen, wobei im Nachstehenden nur von einer Stehbolzen/Aufnahme-Verbindung geredet wird, bevorzugt jedoch mehrere derartige Verbindungen über die Länge der Dachleiste 3 verteilt vorgesehen sind, um diese sicher, auch verdrehsicher, am Kraftfahrzeug festzulegen.

Zunächst wird bei der Montage der Stehbolzen 33 in eine entsprechende Gewindebohrung des Fahrzeugdachs eingeschraubt. Der Ringflansch 34 bildet hierbei eine Einschraubbegrenzung. Die Anordnung ist derart getroffen, dass der Stehbolzen 33 mit seinem den Kopf 36 aufweisenden Abschnitt aus der Dachhaut des Kraftfahrzeugs herausragt. Anschließend wird die Dichtung 18, die an ihrer Unterseite den Klebestreifen 19 aufweist, auf das Fahrzeugdach geklebt, wobei der Stehbolzen 33 das Durchgangsloch 40 der Dichtung 18 durchragt. Nunmehr wird die mit Halteteil 12 versehene Dachleiste 3 in Richtung der Längsmittelachse 37 so dem Fahrzeugdach genähert, dass das Ende des Stehbolzens 33 in die Aufnahme 11 in Richtung der Längsmittellinie 37 eintritt, wobei der Kopf 36 die Querschnittserweiterung 31 passiert und das geradlinig verlaufende Mittelstück 23 im Bereich der Taille 35 zu liegen kommt. In dieser Position liegt die Dachleiste 3 unter Zwischenschaltung der Dichtung 18 auf dem Fahrzeugdach auf. Nunmehr wird die Dachleiste 3 relativ zum Dach des Fahrzeugs und somit relativ zu dem Stehbolzen 33 in Richtung des Pfeiles 41 entlang ihrer Längserstreckung verschoben. Hierbei tritt die Unterseite des Kopfes 36 im Bereich der Taille 35 gegen die Oberseite 42 des Halteteils 12. Dies erfolgt im Bereich des gekröpften Zwischenstücks 24, wobei durch die Kröpfung eine Auflaufschräge 43 ausgebildet ist. Aus alledem wird deutlich, dass aufgrund der Auflaufschräge und der federnden Eigenschaft des Halteteils 12 durch die Verschiebebewegung ein Festspannen der Dachleiste 3 auf dem Dach des Kraftfahrzeugs erfolgt. Der im Durchmesser gegenüber der Taille 35 größere Kopf des Stehbolzens 33 bildet einen Formschluss, wobei die Dimensionierung des Langlochabschnitts des Langlochs 30 derart gewählt ist, dass die Taille 35 auf genommen werden kann, der Kopf 36 jedoch -gemäß Figur 4- eine Hintergriffsstufe 44 für einen Hintergriff des ebenfalls eine Hintergriffsstufe darstellenden Randbereichs des Langlochs 30 bildet. Aufgrund der erwähnten Einsteckbewegung (Pfeil 45 in Figur 1) sowie der Verschiebebewegung (Pfeil 41 in Figur 1) wird die Dachleiste 3 am Dach des Kraftfahrzeugs festgelegt. Um sie wieder zu lösen, ist es lediglich erforderlich, eine Verschiebebewegung in Richtung des Pfeiles 46 durchzuführen und anschließend die Dachleiste 3 in Richtung der Längsmittellinie 37 des Stehbolzens 33 vom Dach abzuheben.

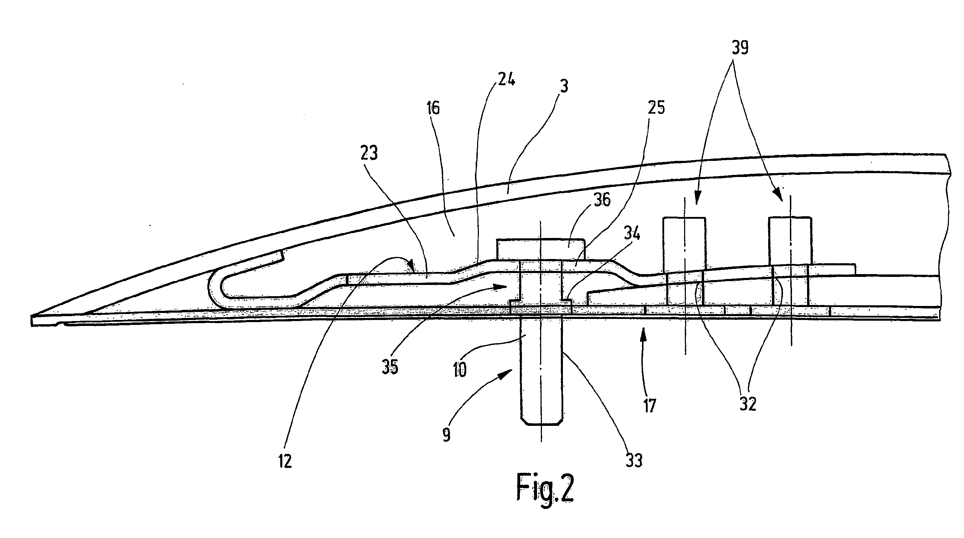

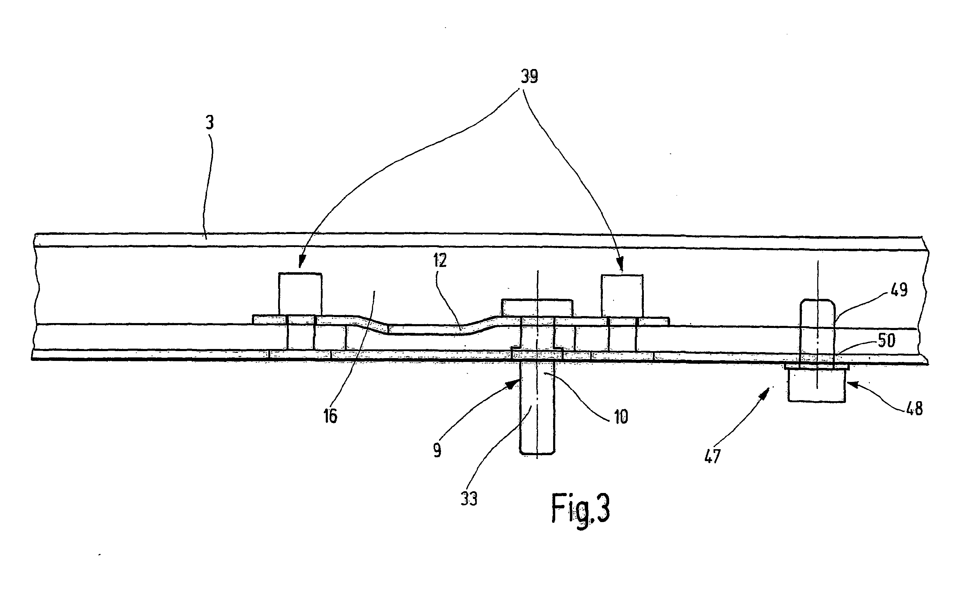

Die Figur 2 verdeutlicht die Endmontagestellung, also die Lage nach Abschluss der Montage. Während die Figur 1 einen Endbereich einer Dachleiste 3 zeigt, geht aus der Figur 3 ein Mittelbereich der Dachleiste 3 hervor. Dort ist das Halteteil 12 nicht mit einem bogenförmig abgewinkelten Endbereich 26 versehen, sondern dieser Bereich ist geradlinig ausgebildet, wobei der Blechstreichen 22 in seinem vorderen und hinteren Endbereich mittels der bereits erwähnten Blindniete 39 an der Dachleiste 3 befestigt ist. Im Übrigen gelten die vorstehenden Ausführungen entsprechend.

Um sicherzustellen, dass sich der aus vorzugsweise zwei Dachleisten 3 bestehende Dachgepäckträger nicht selbsttätig löst, ist eine Schiebestellungssicherungseinrichtung 47 vorgesehen, die von mindestens einer, der Dachleiste 3 zugeordneten Gewindeschraube 48 sowie einer in der Dachleiste 3 ausgebildeten Gewindebohrung 49 gebildet wird. Die Gewindeschraube 48 durchgreift ein Fixierloch 50 in der Dachhaut des Fahrzeugdachs und ist in die Gewindebohrung 49 eingeschraubt. Die Gewindebohrung 49 befindet sich an der Unterseite 17 der Dachleiste 3. Hierdurch ist eine Verschiebung der Dachleiste 3 relativ zum Fahrzeugdach nicht mehr möglich, sodass die Dachleiste 3 ihre Montageendposition nicht mehr verlassen kann.

## Patentansprüche

1. Dachgepäckträger für ein Kraftfahrzeug, der mindestens eine Dachleiste aufweist, die eine Befestigungsvorrichtung zur lösbaren Montage am Dach des Kraftfahrzeugs besitzt, **dadurch gekennzeichnet, dass** die Befestigungsvorrichtung (5) eine Schiebe-Hintergriffs-Klemm-Befestigungsvorrichtung (8) ist, mit mindestens einem Einsteckvorsprung (9) und mindestens einer Aufnahme (11) für den Einsteckvorsprung (9), wobei der Einsteckvorsprung (9) dem Dach und die Aufnahme (11) der Dachleiste (3) zugeordnet und der Einsteckvorsprung (9) auf dem Dach vormontiert ist oder wobei der Einsteckvorsprung (9) der Dachleiste (3) und die Aufnahme (11) dem Dach zugeordnet ist.

2. Dachgepäckträger nach Anspruch 1, **dadurch gekennzeichnet, dass** der Einsteckvorsprung (9) eine eine Axialsicherung bildende Hintergriffsstufe (44) aufweist.

3. Dachgepäckträger nach einem der vorhergehenden Ansprüche, **dadurch gekennzeichnet, dass** der Einsteckvorsprung (9) zur Ausbildung der Hintergriffsstufe (44) eine Taille (35) aufweist.

4. Dachgepäckträger nach einem der vorhergehenden Ansprüche, **dadurch gekennzeichnet, dass** der Ensteckvorsprung (9) einen Kopf (36) aufweist.

5. Dachgepäckträger nach einem der vorhergehenden Ansprüche, **dadurch gekennzeichnet, dass** der Kopf (36) an die Taille (35) anschließt.

6. Dachgepäckträger nach einem der vorhergehenden Ansprüche, **dadurch gekennzeichnet, dass** die Aufnahme (11) ein Langloch (30) aufweist.

7. Dachgepäckträger nach einem der vorhergehenden Ansprüche, **dadurch gekennzeichnet, dass** das Langloch (30) einen Bereich mit einer Querschnittserweiterung (31) zum Einstecken des Kopfes (36) des Einsteckvorsprungs (9) aufweist.

8. Dachgepäckträger nach einem der vorhergehenden Ansprüche, **dadurch gekennzeichnet, dass** die Aufnahme (11) an einem Halteteil (12) ausgebildet ist, das an der Dachleiste (3) befestigt ist.

9. Dachgepäckträger nach einem der vorhergehenden Ansprüche, **dadurch gekennzeichnet, dass** das Halteteil (12) ein Blechteil (13), insbesondere ein Federblechteil (14), ist.

10. Dachgepäckträger nach einem der vorhergehenden Ansprüche, **dadurch gekennzeichnet, dass** das Halteteil (11) für das vorzugsweise mittels der Hintergriffsstufe (44) erfolgenden Klemmhalten eine Auflaufschräge (43) bildet oder aufweist.

11. Dachgepäckträger nach einem der vorhergehenden Ansprüche, **dadurch gekennzeichnet, dass** der Einsteckvorsprung (9) ein Stehbolzen (10) ist.

12. Dachgepäckträger nach einem der vorhergehenden Ansprüche, **gekennzeichnet durch** eine Schiebesteltungssicherungseinrichtung (47).

13. Verfahren zum Befestigen eines Dachgepäckträgers für ein Kraftfahrzeug, der mindestens eine Dachleiste aufweist, die eine Befestigungsvorrichtung zur lösbaren Montage am Dach des Kraftfahrzeugs besitzt, dadurch gekenntzeichnet dass die Dachleiste mittels einer Einsteck- und Schiebebewegung für eine Hintergriffsklemmung befestigt wird, wobei die Befestigungsvorrichtung mindestens einen Einsteckvorsprung und mindestens eine Aufnahme für den Einsteckvorsprung aufweist, wobei der Einsteckvorsprung dem Dach und die Aufnahme der Dachleiste zugeordnet ist und der Einsteckvorsprung auf dem Dach vormontiert wird oder wobei der Einsteckvorsprung der Dachleiste und die Aufnahme dem Dach zugeordnet ist.

## Claims

1. A roof luggage rack for a motor vehicle, comprising at least one roof railing, which is provided with a fastening device for the detachable installation on the roof of the motor vehicle, **characterized in that** the fastening device (5) is a sliding rear-engaging clamping fastening device (8), comprising at least one insertion projection (9) and at least one holder (11) for the insertion projection (9), the insertion projection (9) being associated with the roof and the holder (11) is associated with the roof railing (3), and the insertion projection (9) being preassembled on the roof, or the insertion projection (9) being associated with the roof railing (3) and the holder (11) is associated with the roof.

2. The roof luggage rack according to claim 1, **characterized in that** the insertion projection (9) comprises a rear-engaging step (44) forming an axial retaining element.

3. A roof luggage rack according to any one of the preceding claims, **characterized in that** the insertion projection (9) comprises a waist (35) for forming the rear-engaging step (44).

4. A roof luggage rack according to any one of the preceding claims, **characterized in that** the insertion projection (9) comprises a head (36).

5. A roof-luggage rack according to any one of the preceding claims, **characterized in that** the head (36) connects to the waist (35).

6. A roof luggage rack according to any one of the preceding claims, **characterized in that** the holder (11) comprises an elongated hole (30).

7. A roof luggage rack according to any one of the preceding claims, **characterized in that** the elongated hole (30) comprises a region with a widened cross-section (31) for inserting the head (36) of the insertion projection (9).

8. A roof luggage rack according to any one of the preceding claims, **characterized in that** the holder (11) is provided on a retaining part (12), which is attached to the roof railing (3).

9. A roof luggage rack according to any one of the preceding claims, **characterized in that** the retaining part (12) is a sheet metal part (13), particularly a spring steel sheet part (14).

10. A roof luggage rack according to any one of the preceding claims, **characterized in that** the retaining part (11) forms or comprises a bevel (43) for the clamped retention, which is preferably brought about by means of the rear-engaging step (44).

11. A roof luggage rack according to any one of the preceding claims, **characterized in that** the insertion projection (9) is a stud bolt (10).

12. A roof luggage rack according to any one of the preceding claims, **characterized by** a sliding position securing device (47).

13. A method for fastening a roof luggage rack for a motor vehicle, comprising at least one roof railing, which is provided with a fastening device for the detachable installation on the roof of the motor vehicle, **characterized in that** the roof railing is fastened by means of an insertion and sliding motion for a rear-engaging clamping effect, the fastening device comprising at least one insertion projection and at least one holder for the insertion projection, the insertion projection being associated with the roof and the holder being associated with the roof railing and the insertion projection being preassembled on the roof, or the insertion projection being associated with the roof drip molding and the holder being associated with the roof.

## Revendications

1. Porte-bagages de toit pour un véhicule automobile qui présente au moins une baguette de toit qui possède un dispositif de fixation pour le montage amovible sur le toit du véhicule automobile, **caractérisé en ce que** le dispositif de fixation (5) est un dispositif de fixation à serrage coulissant par contre-dépouille (8), avec au moins une saillie d'enfichage (9) et au moins un logement (11) pour la saillie d'enfichage (9), dans lequel la saillie d'enfichage (9) est associée au toit et le logement (11) à la baguette de toit (3) et la saillie d'enfichage (9) est prémontée sur le toit, ou dans lequel la saillie d'enfichage (9) est associée à la baguette de toit (3) et le logement (11) au toit.

2. Porte-bagages de toit selon la revendication 1, **caractérisé en ce que** la saillie d'enfichage (9) présente un gradin de contre-dépouille (44) formant une fixation axiale.

3. Porte-bagages de toit selon l'une quelconque des revendications précédentes, **caractérisé en ce que** la saillie d'enfichage (9) présente une ceinture (35) pour la réalisation du gradin de contre-dépouille (44).

4. Porte-bagages de toit selon l'une quelconque des revendications précédentes, **caractérisé en ce que** la saillie d'enfichage (9) présente une tête (36).

5. Porte-bagages de toit selon l'une quelconque des revendications précédentes, **caractérisé en ce que** la tête (36) se raccorde à la ceinture (35).

6. Porte-bagages de toit selon l'une quelconque des revendications précédentes, **caractérisé en ce que** le logement (11) présente un orifice oblong (30).

7. Porte-bagages de toit selon l'une quelconque des revendications précédentes, **caractérisé en ce que** l'orifice oblong (30) présente une région avec un élargissement de section transversale (31) pour l'enfichage de la tête (36) de la saillie d'enfichage (9).

8. Porte-bagages de toit selon l'une quelconque des revendications précédentes, **caractérisé en ce que** le logement (11) est réalisé sur une partie de maintien (12) qui est fixée à la baguette de toit (3).

9. Porte-bagages de toit selon l'une quelconque des revendications précédentes, **caractérisé en ce que** la partie de maintien (12) est une partie de tôle (13), notamment une partie de tôle élastique à ressorts (14).

10. Porte-bagages de toit selon l'une quelconque des revendications précédentes, **caractérisé en ce que** la partie de maintien (11) forme ou présente un biseau d'arrêt (43) pour le maintien serré s'effectuant de préférence au moyen du gradin de contre-dépouille (44).

11. Porte-bagages de toit selon l'une quelconque des revendications précédentes, **caractérisé en ce que** la saillie d'enfichage (9) est un boulon fileté (10).

12. Porte-bagages de toit selon l'une quelconque des revendications précédentes, **caractérisé par** un dispositif de fixation à position coulissante (47).

13. Procédé de fixation d'un porte-bagages de toit pour un véhicule automobile qui présente au moins une baguette de toit qui possède un dispositif de fixation pour le montage amovible sur le toit du véhicule automobile, **caractérisé en ce que** la baguette de toit est fixée au moyen d'un mouvement d'enfichage et coulissant pour un serrage par contre-dépouille, dans lequel le dispositif de fixation présente au moins une saillie d'enfichage et au moins un logement pour la saillie d'enfichage, dans lequel la saillie d'enfichage est associée au toit et le logement à la baguette de toit et la saillie d'enfichage est prémontée sur le toit, ou dans lequel la saillie d'enfichage est associée à la baguette de toit et le logement au toit.
